# EUROPEAN PATENT APPLICATION

(11) **EP 0 947 564 A1**
(43) Date of publication of application: **06.10.1999**
(21) Application number: 99301900.9
(22) Date of filing: 12.03.1999
(51) Int. Cl.: C09C 1/24, C09C 3/06, C09C 1/00

(54) **Improvements in ceramic materials**

(30) Priority: 18.03.1998 GB 9805630
(71) Applicant: JOHNSON MATTHEY PUBLIC LIMITED COMPANY, London SW1Y 5BQ (GB)
(72) Inventor: Carthey, Nicholas Andrew, Kidlington, Oxfordshir 0X5 1SQ (GB); Eadon, Desmond Gerard, Alrewas, Staffs DE13 7FE (GB)
(74) Representative: Wishart, Ian Carmichael

(57) **Abstract**

A synthetic Thiviers Earth pigment comprises sub-micron particles of goethite or other precursor for α- Fe₂O₃ dispersed and encapsulated in an organic-free silica matrix. The synthetic product gives a more uniform product with strong clean colour, and permits adjustment to meet customer requirements.

## Description

The present invention concerns improvements in ceramic materials, and more especially concerns a synthetic Thiviers Earth and method for its production.

Thiviers Earth is a yellow-brown natural mineral, and consists of approximately 15wt% goethite (FeO.OH) particles of about 1 µm diameter, embedded in a matrix of silica. It is used extensively in the tile market as a salmon-pink body stain. Unlike most other pigments, it is not necessary to pre-calcine, since the pink colour is formed after mixing with the clay body and firing. Thiviers Earth, however, is experiencing supply problems caused by limited natural resources, and the variability in any natural mineral leads to variability in colour in fired tiles. Whilst such variability can he accepted, or even may appear desirable, in hand-made products, modern industrial tile manufacture requires dependable and consistent colour. Our studies indicate that the particle size of iron oxide in the natural product is in the range from 0.1 to about 5µm and also that the spatial distribution of the particles is quite irregular, causing considerable variability in colour. Also, the natural mineral is contaminated with organic impurities, which are thought to be general organic debris acquired during mining, or ancient trapped matter, which leads to defects in the tile surface upon firing, causing wastage. Specks of organic matter carried into the tile body give rise to a defect known as "black core" in the fired tiles, caused by reduction of the iron oxide during firing. It would therefore be a significant technical and commercial advantage to eliminate such organic impurities.

It has been recognised that a synthetic Thiviers Earth or a substitute for Thiviers Earth would be a desirable product, but although substitute products have been developed and marketed (for example, marketed by Ferro Corp, see Example 3 of USP 5,393,714) these are based on a pre-calcined zirconium pigment (iron coral) and hence are not identical to the natural product. Additionally, such substitute products require expensive manufacturing techniques and are hence very costly in comparison with Thiviers Earth. Other synthetic substitutes are disclosed in USP 4,898,619, particularly aluminium-doped iron oxide crystallites, having an average particles size of less than 100 nanometers, that is less than 0.1 µm, and the pigment thus prepared has a significantly different structure to that of the present invention.

We have now developed a method for manufacturing a synthetic Thiviers Earth pigment which avoids the problems of the natural mineral and exhibits stronger, more intense, colour for a given iron oxide content. Further, the preferred synthetic product contains no organic impurities and does not give rise to tile defects upon firing.

The present invention provides a method for manufacturing a synthetic Thiviers Earth pigment, comprising dispersing goethite or a precursor for α-Fe₂O₃ in an aqueous fine particle size silica dispersion, preferably a colloidal silica dispersion, optionally deagglomerating and milling, if necessary, the goethite or precursor to produce a sub-micron particle size, and gelling the dispersion to provide a silica matrix encapsulating the goethite or precursor.

The invention also provides a synthetic Thiviers Earth pigment comprising submicron particles of goethite or a precursor for α - Fe₂O_{3,} dispersed and encapsulated in an organic-free silica matrix.

The source of goethite is desirably an iron oxide of the type known as "transparent iron oxide". This may be purchased from Ceramics Materials Division of Johnson Matthey PLC, and is preferably used in the form of wet press cake. It will be understood that the source of goethite may be goethite itself or a precursor for goethite or α-Fe₂O₃, including ferric carbonate or sulphate, or magnetite. The goethite or precursor preferably has a particle size of 0.1 to 1µm. The goethite or precursor may include other components providing that these do not adversely affect the colour or performance of the synthetic product. Of course, other components such as doping metals may improve the colour, or give other colour choices, or improve other characteristics. In general, we believe that the presence of aluminium gives a more orange colour, which may be desirable for some uses, also that doping transparent iron oxide with manganese gives a rich brown "mahogany" colour. Cobalt may also be considered as a dopant. We have found that the presence of titanium tends to yield a "dirty" brown colour after firing, and hence we prefer to avoid titanium. Alkali metals and alkaline earth metals such as sodium and calcium generally have no adverse effect beyond diluting the colour, which is generally not desirable.

The goethite or precursor is suitably present in an amount to give Fe₂O₃ in the range of 5 to 20wt% of the dry composition. The present invention permits control of the developed colour, but amounts below 5% tend to be rather pale, and amounts greater than 20% tend to develop brown colours.

The pigment of the present invention may be fired before use, which will develop colour, or may be fired in combination with clay body. We have not observed any difference in the colour after a final fire.

Aqueous silica dispersions are commercially available as such. Although the present invention may be operated by co-milling fine particle silica with the geothite or precursor, it is preferred to use colloidal silica dispersions. Such dispersions may contain up to about 50wt% of silica, or may be prepared by dispersing solid colloidal silica powder in water.

The dispersion of the goethite or precursor in the silica dispersion may be achieved in any suitable way, for example by simple hand mixing or high shear blade mixing. There is a tendency for the dispersion to have agglomerates of iron oxide component, and therefore it is presently preferred to include the step of deagglomerating, which may be done by milling, for example using a bead mill. Such a milling step may also serve to reduce the particle size of the goethite or precursor to below 1µm, preferably in the range 0.1 to 1µm, as well as to disperse the particles within the silica dispersion. Such a preferred method results in a synthetic Thiviers Earth having significantly improved and uniform dispersion compared to the natural product. If desired, a dispersing agent may be used to improve dispersion, and this may permit the use of less expensive milling systems, eg a ball mill instead of a bead mill. This may be an inorganic or fugitive organic agent, providing that no substantial organic contamination of the product takes place.

The resulting dispersion is generally stable, and may be dried, for example by tray drying at 100°C, or spray drying, to drive off all or substantially all of the water present, forming a gel containing dispersed goethite or precursor. Desirably, drying is continued until the solid consists of a chemically-bonded silica matrix, in which the goethite or precursor is encapsulated and protected. As an alternative to drying to form the gel, a suitable gelling agent, for example an inorganic salt or acid, may be used to cause gelling and encapsulation, after which the matrix may be formed by drying.

The synthetic Thiviers Earth product is desirably ground or milled to a particle size of about 10µm. A suitable particle size is in the range 5 to 15µm, and desirably the average particle size is not below about 5µm, since colour strength begins to be lost.

The synthetic product according to the present invention may be used in the same way as the natural Thiviers Earth, by admixing with clay body mix. Typical quantities are 3 parts by weight of synthetic product to 100 parts by weight of body mix. Whilst the primary use of the synthetic product according to the invention is expected to be in the large scale production of tiles, the product may find use to colour bricks, eg as a stain applied to one or more faces, or in the production of decorative pottery items. The synthetic product is observed to have a stronger and "cleaner" colour than the conventional Thiviers Earth from mineral sources. If it is desired to match the natural product, it may be diluted with, for example, up to about 20wt% of an inert material such as silica.

The invention may be varied by utilising a method comprising dispersing ferric sulphate in sodium silicate and gelling by the addition of an acid, but such a method produces sodium sulphate by-product, and the product requires washing, with the need for the consumption of water and disposal of wash water. The preferred method of the invention is remarkably simple and no waste products are generated other than water vapour.

The present invention may also be modified by the substitution of the silica matrix with other matrix materials, and it is envisaged that systems may be developed using colloidal tin oxide or colloidal alumina. Such variants may then find expanded uses, for example in on-glaze colours for decoration.

The invention will now be described by way of example:

### EXAMPLE 1

14g of transparent iron oxide presscake, containing about 50wt% water, was coarsely dispersed by hand mixing in 100g of "Ludox" (Trademark) HS40 colloidal silica aqueous dispersion (DuPont, containing 40% silica by weight). The resulting slurry was then re-circulated for one hour through a 50ml capacity Eiger "Minimill", with a 85% loading of 1.5mm glass beads, operating at 4000rpm. The resulting dispersion was then heated to 80°C with stirring, to evaporate water, until the colloidal silica formed a gel. Drying was completed by farther heating to 100°C for 14 hours, yielding a brown product pigment.

The brown product pigment was ground by dry milling to a mean particle size of 10µm, then added to "Gres Porcellanato" tile body powder, in an amount of 3g of pigment to 100g tile body powder, and wet milled for 20 minutes. For trial purposes, the resulting slurry was applied to the surface of a biscuit tile, which was fired to 1200°C. A strong clean brown-red colour was obtained. The colour was compared to a similar firing using Thiviers Earth, using standard equipment, with the results:

| Colour coordinates | L | a | b |
|---|---|---|---|
| Example 1 | 50.26 | 18.43 | 14.45 |
| Thiviers Earth | 57.11 | 13.37 | 13.42 |

The product according to the invention gives a darker and more red colour than the natural Thiviers Earth.

### EXAMPLE 2

Three batches of Transparent Iron Oxide Blend were prepared (TIO blend) as follows:-
2.8 kg of presscake (see Example 1) dispersed in 5 kg of Ludox HS40 by a Silverson L4R mixer fitted with general purpose circular hole (approximately 2 mm) head for 60 minutes. The TIO blends were treated as follows:-

### Example 2a

A batch of the TIO blend was mixed with a farther 15 kg of Ludox HS40. This was then passed through a 1L Netzsch bead mill (Zetamill, 2 mm media) at 1500 rpm in 20 minutes. The feedtank was constantly agitated during milling.

The resultant suspension was dried, dry milled to a mean particle size of approximately 10 microns and assessed in Gres Porcellanto body powder as described in Example 1.
On firing a dark red colour was obtained with the following colour coordinates:

| | L | a | b |
|---|---|---|---|
| Example 2a | 48.84 | 18.06 | 14.73 |
| (GTCP 207) | | | |

### Example 2b

The second batch of TIO blend was mixed with 15 kg of Ludox HS40 and the resultant blend passed twice through the bead mill using the conditions given in Eample 2a.
The material was dried and milled to a mean particle size of approximately 10 microns. This was then assessed in Gres Porcellanto body powder as described in Example 1.
On firing a dark red colour was obtained with the following colour coordinates:

| | L | a | b |
|---|---|---|---|
| Example 2b | 50.42 | 18.34 | 15.36 |
| (GTCP 208) | | | |

### Example 2c

15 kg of Ludox HS40 was added to 3.9 kg of the TIO blend. This was then passed through the bead mill using the conditions described in Example 2a. The material was dried and milled to a mean particle size of approximately 10 microns and assessed in Gres Porcellanto body powder as described in Example 1. The following colour coordinates were obtained:

| Example 2c | L | a | b |
|---|---|---|---|
| (GTCP 209) | 54.40 | 19.04 | 17.98 |

### EXAMPLE 3

14 g of Transparent Iron Oxide presscake (see Example 1) was ball milled together with 100 g of Ludox HS40 in a 1L pot with 1 cm alumina media. The sample was milled for 2 hours. The resultant slurry was dried, disintegrated and assessed in Gres Porcellanto body powder as described in Example 1.
On firing the following colour coordinates were obtained:

| | L | a | b |
|---|---|---|---|
| Example 3 | 44.94 | 14.53 | 11.83 |
| (GTCP 213) | | | |

### EXAMPLE 4

Example 3 was repeated using 5 hours milling. The sample was dried and assessed as described in Example 1. On firing the following colour coordinates were obtained:

| Example 4 | L | a | b |
|---|---|---|---|
| (GTCP 214) | 50.45 | 16.32 | 13.65 |

### EXAMPLE 5

14 g of Transparent Iron Oxide presscake (see Example 1) was ball milled with 50 g of Ludox HS40, 30 g of Microsil M500 silica powder and 15 ml of water. The sample was milled for 4 hours. The resultant slurry was dried and assessed as in Example 1.
On firing the following colour coordinates were obtained:

| | L | a | b |
|---|---|---|---|
| Example 5 | 57.29 | 11.46 | 12.02 (fast fire) |
| (GTCP 217) | 52.97 | 9.79 | 11.95 (slow firing) |

### EXAMPLE 6

7 g of Bayer 105 M iron oxide was ball milled together with 50 g of Ludox HS40, 30 g of Microsil M500 silica powder and 15 ml of water for 17 hours. The sample was dried and assessed as described in Example 1.
On firing the following colour coordinates were obtained:

| | L | a | b |
|---|---|---|---|
| Example 6 | 55.67 | 9.97 | 9.14 (fast fire) |
| (GTCP 219) | 51.18 | 8.29 | 8.14 (slow fire) |

### EXAMPLE 7

Transparent iron oxide presscake and Ludox HS40 were Eiger milled together, dried and assessed as described in Example 1. Samples were prepared with different loadings of iron oxide:

| | L | a | b |
|---|---|---|---|
| Example 7a | 53.1 | 19.54 | 17.03 (approximately 8 wt% iron) |
| (GTCP 201) | | | |
| Example 7b | 49.77 | 17.57 | 13.85 (approximately 22.3 wt% iron) |

## Claims

1. A method for manufacturing a synthetic Thiviers Earth pigment, comprising dispersing goethite or other precursor for α- Fe₂O₃ in an aqueous fine particle size silica dispersion, optionally deagglomerating and milling, if necessary, the goethite or precursor to form a sub-micron particle size, and gelling the dispersion to provide a silica matrix encapsulating the goethite or precursor.

2. A method according to claim 1, wherein the sub-micron particle size is in the range 0.1 to 1µm.

3. A method according to claim 1 or 2, wherein the goethite or precursor is admixed in an amount to yield 5 to 20wt% Fe₂O₃ in the dried pigment.

4. A method according to any one of the preceding claims, wherein the aqueous silica dispersion is a dispersion of colloidal silica.

5. A method according to any one of the preceding claims, wherein gelling is effected by drying.

6. A method according to claim 1, substantially as hereinbefore described.

7. A synthetic Thiviers Earth pigment, comprising sub-micron particles of goethite or other precursor for α-Fe₂O₃, dispersed and encapsulated in a substantially organic-free silica matrix.

8. A pigment according to claim 7, wherein the goethite or precursor has a particle size in the range 0.1 to 1µm.

9. A pigment according to claim 7 or 8, having a particle size in the range 5 to 15µm.

10. A modification of the pigment of claim 7, wherein the silica matrix is at least partly replaced by tin oxide or other matrix material.

11. A fired ceramic comprising a pigment according to any one of claims 7 to 10, as a body colour or used as a surface stain.
